# EUROPEAN PATENT APPLICATION

(11) **EP 2 811 333 A1**
(43) Date of publication of application: **10.12.2014**
(21) Application number: 14170703.4
(22) Date of filing: 30.05.2014
(51) Int. Cl.: G02B 27/22

(54) **Holographic display extension for portable device and method of manufacturing same**

(30) Priority: 03.06.2013 US 201313908198
(71) Applicant: 4DDynamics Bvba, 2100 Antwerp (BE); Grauzinis, Aivaras, 2110 Wijnegem (BE)
(72) Inventor: Grauzinis, Aivaras, B-2110 Wijnegem (BE)
(74) Representative: IPLodge bvba

(57) **Abstract**

The invention pertains to a display extension for a device with a display, the display extension comprising a substantially transparent screen and positioning means adapted to position the substantially transparent screen at an acute angle relative to the display, said substantially transparent screen comprising at least one zone of increased reflectivity. The invention also pertains to a method of displaying a holographic illusion, the method comprising displaying a photograph or a video on a display of a device, while a display extension as described above is positioned so as to keep the substantially transparent screen at an acute angle relative to the display. The invention also pertains to a method for manufacturing the display extension described above, and to a substantially transparent sheet that can be formed into such a display extension.

## Description

The present invention relates to the field of image projection, in particular image projection that evokes a holographic illusion.

It is becoming very common for people to own devices that can be used to watch digital photographs and videos stored on the device or streamed to it over a network, in particular via a mobile internet connection. These devices include mobile phones, in particular so-called smart phones, tablet computers, and laptop computers. Although the video quality of the displays of these devices has kept improving over the past years, they are limited to showing two-dimensional video. Hence, these devices do not provide a fully satisfactory way to view video data that is representative of an inherently three-dimensional scenery, such as separately rendered views of a three-dimensional model, corresponding to different points of view and viewing angles.

It is an object of embodiments of the present invention to at least partially overcome this disadvantage.

According to an aspect of the present invention, there is provided a display extension for a device with a display, the display extension comprising a substantially transparent screen and positioning means adapted to position the substantially transparent screen at an acute angle relative to the display, the substantially transparent screen comprising at least one zone of increased reflectivity.

A technique known by the name of "Pepper's Ghost" has been used to produce the illusion of the sudden appearance of a ghostly figure in an initially empty scene. The technique works by making the observer watch the empty scene through an angled transparent pane, the presence of which is not suspected by the observer. The figure that is to appear in the scene is positioned in a dark place outside the direct field of view of the observer, but in such a way that its reflection on the transparent pane will become visible as soon as the figure is sufficiently lit. Accordingly, the figure can be made to appear or disappear by increasing or decreasing the amount of lighting applied to the figure. Clearly, application of this technique requires fine control over the lighting of the figure to be reflected and the background scenery.

The present invention is based *inter alia* on the insight of the inventor that the Pepper's Ghost technique can be applied to images displayed on devices of the aforementioned type.

The present invention is further based *inter alia* on the insight of the inventor that the quality of the holographic illusion is determined by the blending of the reflected image with the transmitted background scenery. To improve this blending, the present invention uses a screen with varying reflectivity.

The inventor has found that, despite a lack of tight control over the ambient lighting conditions, an adequate Pepper's Ghost illusion can be obtained by using a screen with at least one zone of increased reflectivity.

The substantially transparent screen may for example be made of glass, cellophane, or a transparent plastic. Preferably, it is a thin sheet or a film. The term "transparent" is used in relation with light in the visible spectrum. Although every sufficiently smooth surface presents some degree of reflectivity, the screen will be considered substantially transparent if it is possible to clearly see through it. A visible light transmission coefficient of .8 or more is preferred; a visible light transmission coefficient of .9 or more is more preferred. The zone of increased reflectivity preferably has a maximum reflection coefficient of .2 or more; it could be .4 or more; or even .6 or more.

The zone of increased reflectivity may be provided by locally using a material with a different refractive index, by laminating a layer of a more reflective material onto a transparent substrate, by applying a coating, or similar means.

The skilled person will understand that the zone of increased reflectivity is defined by the relative difference in reflectivity vis-a-vis the remaining part of the screen. A zone of increased reflectivity may thus also be obtained by treating the rest of the screen to decrease its reflectivity. Again, this decreased reflectivity may be achieved by laminating or coating an anti-reflective layer of suitable material onto the substrate.

Preferably, the zone of increased reflectivity is positioned centrally on the screen; this allows for blending the reflected image into the background on all sides. Preferably, the zone is circular or oval, as sharp angles may draw attention, which decreases the quality of the illusion. Preferably, the change in reflectivity is gradual, to further improve the blending effect.

In an embodiment of the display extension according to the present invention, the at least one zone of increased reflectivity consists of a zone in which a coating has been applied to the screen.

Several coatings that increase the reflectivity towards visible light of a substantially transparent substrate are known in the art. As a coating can easily be applied locally, the use of a coating is particularly suitable way of producing the reflectivity variation required by the present invention. A coating is particularly suited for providing a gradual change of reflectivity.

In an embodiment of the display extension according to the present invention, the at least one zone of increased reflectivity is obtained by applying an anti-reflective coating the remainder of the screen.

Several coatings that decrease the reflectivity towards visible light of a substantially transparent substrate are known in the art. As a coating can easily be applied locally, the use of a coating is particularly suitable way of producing the reflectivity variation required by the present invention. A coating is particularly suited for providing a gradual change of reflectivity.

In an embodiment of the display extension according to the present invention, the transparent screen and the positioning means are made of one sheet, the positioning means comprising appropriately bent or folded portions of the sheet.

It is an advantage of this embodiment that the screen blends more naturally into its surroundings, because the positioning means are also transparent, thus increasing the effect of the visual illusion. Most preferably, the portion of the sheet forming the positioning means is also treated with an antireflective coating.

It is a further advantage of this embodiment that the display extension can be manufactured in a very simple manner. In particular, adequately prepared sheets can be prepared in advance, and provided to end user along with folding instructions to obtain the display extension.

In an embodiment of the display extension according to the present invention, the sheet is a plastic sheet.

Several types of transparent plastic are known, such as polycarbonates and PMMA. They are relatively cheap and adequately withstand bending or folding if an appropriate sheet thickness is selected. Typically, sheet thicknesses in the order of several microns to several hundreds of microns provide a good balance between rigidity and foldability.

In a particular embodiment, the sheet is folded in the shape of a truncated inverted pyramid, and the at least one zone of increased reflectivity comprises a zone of increased reflectivity on each face of the pyramid.

It is an advantage of this embodiment that, when several views of a figure are simultaneously displayed at appropriate places of the display, the user can "walk around" the illusion and see different holographic views of the figure under geometrically consistent angles.

In an embodiment of the display extension according to the present invention, circumferential edges of said screen are rounded.

It is an advantage of this embodiment that the screen blends more naturally into its surroundings, thus increasing the effect of the visual illusion. Most preferably, the circumferential edges of the screen are also treated with an antireflective coating.

According to an aspect of the present invention, there is provided a method of displaying a holographic illusion, the method comprising displaying a photograph or a video on a display of a device, while a display extension as described above is positioned so as to keep the substantially transparent screen at the acute angle relative to the display.

The technical effects and advantages of this method correspond *mutatis mutandis* to those of the display extension described above.

According to an aspect of the present invention, there is provided a method for manufacturing a display extension for a device with a display, the method comprising:
- providing a sheet of a substantially transparent material with at least one zone of increased reflectivity;
- bending or folding the sheet so as to form positioning means adapted to position a planar portion of the substantially transparent sheet at an acute angle relative to the display, and such that the at least one zone of increased reflectivity is present in the planar portion.

This method provides a particularly efficient way of manufacturing the display extension according to an embodiment of the present invention.

According to an aspect of the present invention, there is provided a substantially transparent sheet, comprising at least one zone of increased reflectivity and folding marks arranged such that the sheet, when folded according to said folding marks, constitutes a display extension as described above.

It is an advantage of this embodiment that the display extension can be manufactured in a very simple manner. In particular, adequately prepared sheets can be prepared in advance, and provided to end user along with folding instructions to obtain the display extension.

These and other technical effects and advantages of the invention will now be described in more detail with reference to the accompanying drawings, in which:
Figure 1 schematically illustrates a holographic illusion as produced by the use of a display extension according to an embodiment of the present invention;
Figure 2 provides a flow chart of a method according to an embodiment of the present invention;
Figure 3 illustrates a sheet according to another embodiment of the present invention; and
Figure 4 illustrates a holographic illusion as produced by the use of a display extension according to another embodiment of the present invention.

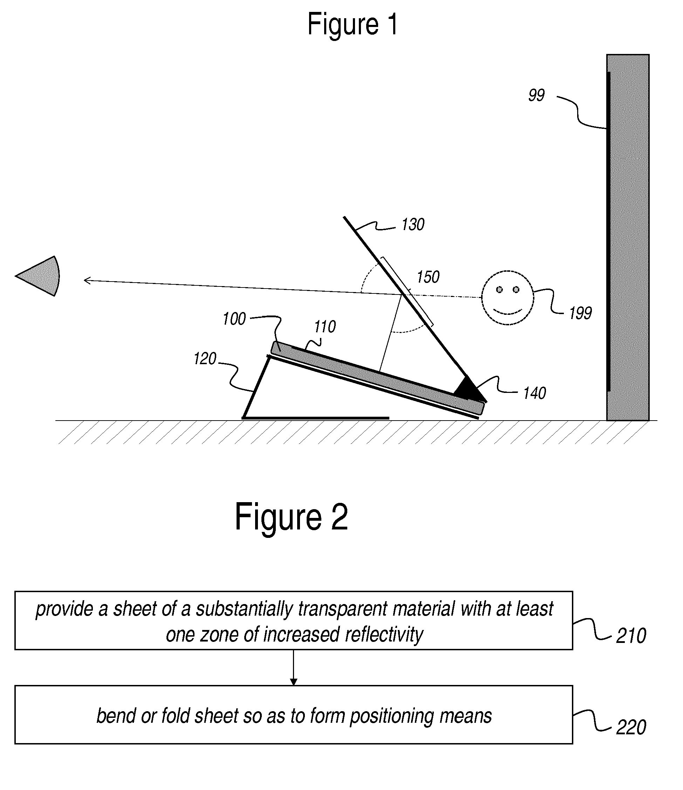

As shown in Figure 1, one embodiment of the present invention is a display extension for a device **100** with a display 110.

The display extension comprises a substantially transparent screen **130** and positioning means **140** adapted to position the substantially transparent screen **130** at an acute angle relative to the display **110.** The substantially transparent screen **130** comprises at least one zone **150** of increased reflectivity.

The display extension can be used for displaying a holographic illusion. This is achieved displaying a photograph or a video on a display **110** of a device **100,** while the display extension is positioned so as to keep the substantially transparent screen **130** at an acute angle relative to said display **110.**

The device **100** is illustrated as a substantially flat device with a large flat display **110.** Devices that may be used for this purpose include common smart phones and tablet computers. The display **110** is preferably tilted away from the observer (schematically represented by the eye on the left hand side of the drawing), to enhance the illusion. To this effect, the illustrated device **100** rests, without loss of generality, on a flap-type cover **120** that is partially folded back beneath the back side of the device **100.**

An image displayed on the display **110** of the device **110** is reflected under an acute angle by the substantially transparent screen **130.** An exemplary ray is traced from the display **110** via the substantially transparent screen **130** to the observer, to illustrate where a reflection **199** of the displayed image would appear to the observer.

As the substantially transparent screen **130** is non-reflective outside the zone **150** of increased reflectivity, the ghost image **199** will appear to blend into the background, consisting of any objects or scenery **99** behind the screen **130.**

The positioning means **140** are schematically illustrated by triangles. In a preferred embodiment, described in more detail below, the positioning means **140** comprise folded portions of the same sheet that constitutes the substantially transparent screen. These folded portions may rest on the edges or the display **110** of the device **100,** or fold underneath it. Alternatively, the positioning means **140** may comprise a holder for the screen, attached to feet, suction caps, clips, or other elements that allow securing the position of the screen **130** relative to the display **110.**

Embodiments of the present invention can be used to display 3-dimensional information by means of a holographic illusion for a variety of purposes. The displayed subject matter may be of an informative or educational nature, it may be presented for entertainment, or a combination thereof. The invention may be used in any available environment. The experience may be enhanced by combining the invention with 2-dimensional video scenery, which may be displayed behind the reflected image **199**, a setup which is schematically represented by the presence of the flat-screen display **99** in Figure 1.

Figure 2 provides a flow chart of a method for manufacturing a display extension according to an embodiment of the present invention. The method comprises providing **210** a sheet of a substantially transparent material with at least one zone of increased reflectivity; and bending or folding **220** the sheet so as to form positioning means adapted to position a planar portion of the substantially transparent sheet at an acute angle relative to the display, and such that the at least one zone of increased reflectivity is present in the planar portion.

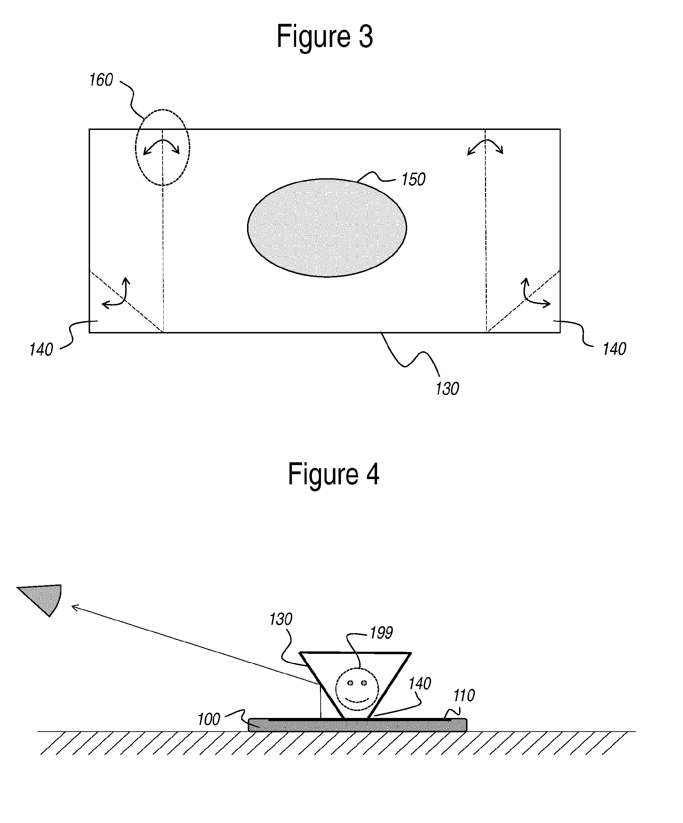

Figure 3 illustrates a sheet according to another embodiment of the present invention. The sheet **130** is preferably made of transparent plastic film. While the illustrated sheet **130** is rectangular, the skilled person will appreciate that equivalent effects can be obtained with sheets of different shapes. The sheet **130** is provided with a zone of increased reflectivity **150,** which is illustrated as a substantially centrally placed zone of a generally oval shape. The choice of shape and position is purely exemplary; other shapes and positions may be used according to the intended application.

The sheet **130** is further provided with folding marks **160** arranged such that the sheet **130,** when folded according to these folding marks **130,** constitutes a display extension according to an embodiment of the invention. Indeed, it can be seen that by folding the left and right portions of the sheet **130** inwards at an angle of 90° along the vertical dashed lines, and folding the lower left and right corners outward at an angle of 90° along the oblique dashed lines, a simple forward leaning screen is obtained, which can be placed on or over a flat display in the arrangement shown in Figure 1.

Figure 4 provides a setup analogous to the one of Figure 1, but with a different embodiment of the display extension. Like reference numerals have been used to designate like elements. In this embodiment, the sheet **130** is folded in the shape of a truncated inverted pyramid. The positioning means **140** are constituted of the ribs at the narrow end of the truncated pyramid (and optionally a face delimited by these ribs). The at least one zone of increased reflectivity **150** consists of zones on one or more lateral faces of the inverted pyramid. Preferably, such zones of increased reflectivity are provided on all lateral faces. In that case, when several views of a figure are simultaneously displayed at appropriate places on the display **110,** a user could go around the pyramid and see different holographic views of the figure under geometrically consistent angles. By adequate adjusting the displayed images to the dimensions of the pyramid, the viewed object **199** will appear to be present inside the pyramid.

While the invention has been described herein with reference to several embodiments, this was done to illustrate and not to limit the invention, the scope of which is determined by the accompanying claims.

## Claims

1. A display extension for a device with a display, the display extension comprising a substantially transparent screen and positioning means adapted to position said substantially transparent screen at an acute angle relative to said display, said substantially transparent screen comprising at least one zone of increased reflectivity.

2. The display extension according to claim 1, wherein said at least one zone of increased reflectivity consists of a zone in which a coating has been applied to said screen.

3. The display extension according to claim 1, wherein said at least one zone of increased reflectivity is obtained by applying an anti-reflective coating the remainder of said screen.

4. The display extension according to any of the preceding claims, wherein said transparent screen and said positioning means are made of one sheet, said positioning means comprising appropriately bent or folded portions of said sheet.

5. The display extension according to claim 4, wherein said sheet is a plastic sheet.

6. The display extension according to claim 4 or claim 5, wherein said sheet is folded in the shape of a truncated inverted pyramid, and wherein said at least one zone of increased reflectivity comprises a zone of increased reflectivity on each face of said pyramid.

7. The display extension according to any of the preceding claims, wherein circumferential edges of said screen are rounded.

8. A method of displaying a holographic illusion, the method comprising displaying a photograph or a video on a display of a device, while a display extension according to any of the preceding claims is positioned so as to keep said substantially transparent screen at said acute angle relative to said display.

9. A method for manufacturing a display extension for a device with a display, the method comprising:
- providing a sheet of a substantially transparent material with at least one zone of increased reflectivity;
- bending or folding said sheet so as to form positioning means adapted to position a planar portion of said substantially transparent sheet at an acute angle relative to said display, and such that said at least one zone of increased reflectivity is present in said planar portion.

10. A substantially transparent sheet, comprising at least one zone of increased reflectivity and folding marks arranged such that the sheet, when folded according to said folding marks, constitutes a display extension according to claim 4.
